# EUROPEAN PATENT APPLICATION

(11) **EP 4 480 640 A1**
(43) Date of publication of application: **25.12.2024**
(21) Application number: 22927415.4
(22) Date of filing: 27.04.2022
(51) Int. Cl.: B25J 9/00, B25J 9/10

(54) **MANUAL MUSCULAR STRENGTH SUPPORT ROBOT HAVING FUNCTION OF SUPPORTING TRANSFER OF HEAVY OBJECT**

(30) Priority: 18.02.2022 KR 20220021666
(71) Applicant: Hexarhumancare Co., Ltd., Ansan-si, Gyeonggi-do 15588 (KR)
(72) Inventor: HAN, Chang Soo, Ansan-si Gyeonggi-do 15588 (KR)
(74) Representative: Prüfer & Partner mbB Patentanwälte · Rechtsanwälte
(86) International application number: PCT/KR2022/005982
(87) International publication number: WO 2023/158017

(57) **Abstract**

A manual muscular strength support robot having a function of supporting the transfer of a heavy object according to an embodiment of the present invention includes a first mounting part mounted on the coxa region of a user, a second mounting part mounted on the femoral region of the user, a third mounting part mounted on the back region of the user, a manual muscular strength supporter fixed to the first mounting part, inter-operably connected to the second mounting part and the third mounting part, and configured to store an elastic force for supporting muscular strength of the user to provide the elastic force to the second mounting part and the third mounting part, and an arm's muscular strength supporter, one side part of which is connected to the third mounting part, the other side part of which is worn on the hand of the user, and which is engaged with a handle of a heavy object together with the hands of the user when the user transfers the heavy object so as to support arm's muscular strength of the user by using an elastic force of the manual muscular strength supporter.

## Description

### [Technical Field]

The present invention relates to a manual muscular strength support robot having a function of supporting the transfer of a heavy object, and more particularly a manual muscular strength support robot having a function of supporting the transfer of a heavy object capable of effectively supporting user's arm muscle strength by wearing the manual muscular strength support robot when transferring a heavy object, thereby being capable of easily lifting and smoothly transfer the heavy object.

### [Background Art]

Existing passive muscle support robots are generally designed to assist the lifting motion of a heavy object. Here, muscle support is provided by pushing the user's chest area, or by pulling the waist by positioning the user's back.

These passive muscle support robots have a structure to which a spring member such as a gas spring, a coil spring, and a spring spring is applied, thus storing elastic energy according to a user's movement and utilizing it to support user's muscle strength when necessary.

In particular, the passive muscle support robots have been used to reduce the load of user's forward bending or twisting motion when lifting or moving a heavy object by outputting an elastic force stored in the ligaments and lumbar joints of the lumbar and sacral vertebrae of the body, thereby performing the role of muscle support.

Meanwhile, existing passive muscle support robots are designed and manufactured to have a muscle support exoskeleton structure. In these passive muscle support robots, support types, dependent upon purposes, and joint modules, dependent upon locations, are separately manufactured and are connected to mounting parts for supporting the user's body.

Accordingly, exoskeleton robots should be manufactured individually depending upon the type of muscle support and the user's physical characteristics, the process of putting on or taking off a passive muscle support robot with an exoskeleton structure is not easy, and a use method thereof is complex and difficult, so the convenience and efficiency of use are low, and the economic benefits of using the passive muscle support robot are also low. Therefore, various studies have been continuously conducted to improve the versatility, wearability, usability, efficiency, economy, etc. of passive muscle support robots.

As related art documents, there are Korean Patent No. 10-1490617 (Invention Title: MUSCLE POWER TRANSMISSION DEVICE AND MUSCLE POWER SUPPORT ROBOT INCLUDING THE SAME, registered on January 30, 2015), and Korean Patent No. 10-1073525 (Invention Title: WEARABLE ROBOT FOR LOWER LIMB MUSCLE POWER SUPPORT, registered on October 07, 2011).

### [Disclosure]

### [Technical Problem]

Therefore, the present invention has been made in view of the above problems, and it is one object of the present invention to provide a manual muscular strength support robot having a function of supporting the transfer of a heavy object, the manual muscular strength support robot being capable of effectively supporting user's arm muscle strength, by wearing the manual muscular strength support robot, when transferring a heavy obj ect, thereby enabling a user to easily and smoothly perform a task of lifting and transferring a heavy object.

It is another object of the present invention to provide a manual muscular strength support robot having a function of supporting the transfer of a heavy object, the manual muscular strength support robot being capable of simply supporting user's arm muscle strength when transferring a heavy object and being simply and easily applied to various types of manual muscular strength support robots.

It is yet another object of the present invention to provide a manual muscular strength support robot having a function of supporting the transfer of a heavy object, the manual muscular strength support robot being capable of being appropriately adjusted according to the length of the user's arm when transferring a heavy object and not requiring a separate length-adjusting component.

### [Technical Solution]

In accordance with an aspect of the present invention, the above and other objects can be accomplished by the provision of a manual muscular strength support robot having a function of supporting the transfer of a heavy object, including: a first mounting part mounted on the coxa region of a user, a second mounting part mounted on the femoral region of the user, a third mounting part mounted on the back region of the user, a manual muscular strength supporter fixed to the first mounting part, inter-operably connected to the second mounting part and the third mounting part, and configured to store an elastic force for supporting muscular strength of the user to provide the elastic force to the second mounting part and the third mounting part, and an arm's muscular strength supporter, one side part of which is connected to the third mounting part, the other side part of which is worn on the hand of the user, and which is engaged with a handle of a heavy object together with the hands of the user when the user transfers the heavy object so as to support arm's muscular strength of the user by using an elastic force of the manual muscular strength supporter.

The manual muscular strength supporter may operate the second mounting part and the third mounting part in a first direction according to a movement of the user to store the elastic force, and operate the second mounting part and the third mounting part in a second direction according to the elastic force to support muscle strength of the user, and

The arm's muscular strength supporter may provide the elastic force provided to the third mounting part to a handle of the heavy object in a direction of lifting the heavy object to support arm's muscular strength of the user necessary for a transfer task of the heavy object.

Preferably, the arm's muscular strength supporter may include: an arm's muscular strength support wire whose one end is fixed to the third mounting part to interoperate together with the third mounting part; a wearing part worn on hands of the user; and an arm's muscular strength support part fixed to the wearing part, connected to the other end of the arm's muscular strength support wire, and, when transferring the heavy object, hung on the handle of the heavy object to assist in lifting the heavy object.

Here, the manual muscular strength support robot having a function of supporting the transfer of a heavy object according to an embodiment of the present invention may further include a first wearing member worn on a waist of the user and provided with the first mounting part fixed thereto; and a second wearing member worn on shoulders of the user, and connected to the third mounting part to operate together with the third mounting part, wherein one end of the arm's muscular strength support wire is connected to the second wearing member.

Differently from the above, the arm's muscular strength supporter may further include a wire guide having one end connected to the third mounting part, the wire guide lengthily extending forward along the shoulder of the user from the third mounting part and having a pipe shape to accommodate the arm muscular strength support wire thereinside. Here, one end of the arm muscular strength support wire may be inserted into the wire guide and connected to the third mounting part.

Preferably, the arm muscular strength support part may include: a handle hook connected to the wearing part, and hung on the handle of the heavy object while being held by the hand of the user when transferring the heavy object; and a wire length adjustment part arranged inside the handle hook to be connected to the other end of the arm muscular strength support wire, and configured to automatically adjust a length of the arm muscular strength support wire according to a position of the handle hook.

Here, the handle hook may include: a first housing, the wearing part being connected to one side surface of the first housing, and a hanging member hung on the handle of the heavy object when transferring the heavy object to support a load of the heavy object protruding from the other side surface of the first housing; a second housing connected to the other side surface of the first housing so as to be lifted up and down, and provided with a seating member, where the handle of the heavy object is to be seated when transferring the heavy object, formed to protrude from an upper side of the hanging member; and an elastic member disposed between the hanging member and the seating member to elastically support the second housing.

The elastic member may be provided to apply an elastic force to the seating member in a direction of lifting the second housing. The second housing may be lifted to a first position along the first housing by an elastic force of the elastic member when not transferring the heavy object, and may be lowered to a second position along the first housing by the load of the heavy object acting on the seating member when transferring the heavy object. A length adjustment function of the wire length adjustment part for the arm muscular strength support wire may be blocked when the second housing is lowered to the second position so that a position of the handle hook is restrained.

In addition, the wire length adjustment part may include: a roll member rotatably disposed on the other side surface of the first housing and connected to the other end of the arm muscular strength support wire to wind or unwind the other end of the arm muscular strength support wire according to a rotation direction; a plurality of roll gears continuously provided along an outer circumference of the roll member; and a restraining member provided in the second housing to face the roll gear, and configured to restrain rotation of the roll member by being caught by the roll gear when the second housing is lowered to the second position.

The restraining member may be provided in a form of either an engaging protrusion into which the roll gears are inserted when the second housing is lowered to the second position; or a gear tooth engaged with a portion of the roll gears.

Differently from the above, the handle hook may include: a first housing, the wearing part being connected to one side surface of the first housing, and a hanging member hung on the handle of the heavy object when transferring the heavy object to support a load of the heavy object protruding from the other side surface of the first housing; a second housing integrally connected to the first housing to face the other side surface of the first housing and brought into close contact with the heavy object when transferring the heavy object; a pressing member movably disposed in the second housing, and pressed by being brought into close contact with the heavy object when transferring the heavy object; and an elastic member disposed between the pressing member and the second housing to elastically support the pressing member.

The elastic member may be provided to apply an elastic force to the pressing member in a direction of protruding from the second housing. The pressing member may move to a third position, which protrudes from the second housing, by an elastic force of the elastic member when not transferring the heavy object, and move to a fourth position, pressed to an inside of the second housing, by interference with the heavy object when transferring the heavy object. A length adjustment function of the wire length adjustment part for the arm muscular strength support wire may be blocked when the pressing member moves to the fourth position, so that a position of the handle hook is restrained.

In addition, the wire length adjustment part may include: a roll member rotatably disposed on the other side surface of the first housing to face the pressing member and connected to the other end of the arm muscular strength support wire to wind or unwind the other end of the arm muscular strength support wire according to a rotation direction; a plurality of roll gears continuously provided along an edge of one side surface, which corresponds to the pressing member, of both side surfaces of the roll member; and a restraining member provided on one side surface, which faces the roll gear, of the pressing member and configured to restrain rotation of the roll member by being caught by the roll gear when the pressing member is moved to the fourth position.

The restraining member may be provided in a form of either an engaging protrusion inserted between the roll gears when the pressing member is moved to the fourth position, or a gear tooth engaged with the roll gears.

Preferably, the arm's muscular strength supporter may include a first arm's muscular strength supporter worn on a left hand of the user, and a second arm's muscular strength supporter worn on a right hand of the user. The first arm's muscular strength supporter and the second arm's muscular strength supporter may be connected to the third mounting part.

Preferably, the manual muscular strength supporter may be fixed to the first mounting part arranged on each of both sides of the first wearing member. The second mounting part may include a second mounting body disposed on each thigh area of the user; and a second connecting member for connecting the second mounting body and the manual muscular strength supporter one by one. The third mounting part may include a third mounting body mounted on a back region of the user; and third connecting members for connecting the third mounting body and the manual muscular strength supporters.

Preferably, the manual muscular strength supporter may include: a body including a first driving body and second driving body connected to each other, a driving space being formed between the first driving body and the second driving body; a first connecting part for connecting the first driving body to the first mounting part; a second connecting part for connecting the first driving body and the second connecting member; a third connecting part for connecting the second driving body and the third connecting members; an elastic part provided in the driving space and having a deformable elastic force; and an induction part configured to interoperate with a movement of at least one of the first connecting part, the second connecting part and the third connecting part to induce deformation of the elastic part.

The induction part may include: a first induction member axially coupled to the first driving body, connected to one end of the elastic part, and configured to axially rotate in a direction in which the elastic part is wound or released; and a second induction member connected to the other end of the elastic part, and provided to move along an induction line provided in the first driving body.

### [Advantageous effects]

A manual muscular strength support robot having a function of supporting the transfer of a heavy object according to an embodiment of the present invention has a structure wherein an elastic force is stored in a manual muscular strength supporter while a second mounting part and a third mounting part move according to the movement of a user, and then the elastic force of the manual muscular strength supporter is provided to an arm's muscular strength supporter to assist in a task of transferring a heavy object. Accordingly, when transferring a heavy object, the user's arm muscle strength can be effectively supported by using the manual muscular strength support robot, and the user can lift a heavy object and move simply and smoothly transfer it to a desired position with little force. Accordingly, in the present embodiment, the manual muscular strength support robot can efficiently assist in a task of transferring a heavy object while a user wears the manual muscular strength support robot, so that when transferring a heavy object, the work efficiency can be improved, and the user can smoothly transfer a heavy object that is difficult for the user to lift.

In addition, the manual muscular strength support robot having a function of supporting the transfer of a heavy object according to an embodiment of the present invention has a structure wherein an elastic force of the manual muscular strength supporter is transmitted through an arm muscular strength support wire connected to a third mounting part and provided an arm muscular strength support part hung on a handle of a heavy object, so the elastic force of the manual muscular strength supporter is provided to the handle of the heavy object in a direction of lifting the heavy object. Accordingly, the magnitude required for the user to lift the heavy object can be reduced, and in this state, the user can easily transfer the heavy object to a desired place. Accordingly, in the present embodiment, when transferring a heavy object, the transport support function of the manual muscular strength support robot can be implemented though a simple work of hanging the arm muscular strength support part of the arm's muscular strength supporter on the handle of the heavy object and lifting it when transferring the heavy object.

In addition, the manual muscular strength support robot having a function of supporting the transfer of a heavy object according to an embodiment of the present invention has a structure wherein the arm's muscular strength supporter includes an arm muscular strength support wire, a wearing part and an arm muscular strength support part. Accordingly, the arm's muscular strength supporter can be simply manufactured with low costs, and can be smoothly applied to various types of manual muscular strength support robots.

In addition, the manual muscular strength support robot having a function of supporting the transfer of a heavy object according to an embodiment of the present invention when transferring a heavy object can easily adjust the length of the arm muscular strength support wire by using the wire length adjustment part of the arm muscular strength support part. Accordingly, the arm's muscular strength supporter can be adjusted to be suitable for the arm length of a user so that users with various body types can smoothly use the arm's muscular strength supporter.

In addition, the manual muscular strength support robot having a function of supporting the transfer of a heavy object according to an embodiment of the present invention can easily adjust the length of an arm muscular strength support part as an arm muscular strength support wire winds or unwinds a wire length adjustment part of the arm muscular strength support part, when not transferring a heavy object, and, when transferring a heavy object, the operation of the wire length adjustment part can be restrained by the load of the heavy object of the force of the user while a handle hook of the arm muscular strength support part is hung on the handle of the heavy object. Accordingly, the present embodiment can selectively restrain the operation of the wire length adjustment part without separate manipulation in the process of transferring the heavy object, so that the inconvenience of adjusting the length of the arm muscular strength support wire can be reduced.

Further, the manual muscular strength support robot having a function of supporting the transfer of a heavy object according to an embodiment of the present invention has a structure wherein the operation of the wire length adjustment part is controlled or restrained by the load of a heavy object or the force of a user when transferring a heavy object. Accordingly, a separate length adjustment switch that has been conventionally used to change and restrain the length of the arm muscular strength support wire can be omitted, and the load of a heavy object or the user's force can be used as the restraint force required to restrain the wire length adjustment part.

### [Description of Drawings]

FIG. 1 schematically illustrates a state of wearing a manual muscular strength support robot having a function of supporting the transfer of a heavy object according to an embodiment of the present invention.
FIG. 2 illustrates a perspective view of the manual muscular strength support robot illustrated in FIG. 1.
FIG. 3 illustrates an exploded view of a main part of the manual muscular strength support robot illustrated in FIG. 2.
FIG. 4 illustrates a manual muscular strength supporter illustrated in FIGS. 1 and 2.
FIGS. 5 to 8 illustrate an arm's muscular strength supporter shown in FIGS. 1 and 2.
FIGS. 9 to 11 illustrate another embodiment of the arm's muscular strength supporter shown in FIGS. 1 and 2.
FIG. 12 schematically illustrates a wearing state of a manual muscular strength support robot having a transport support function for a heavy object according to another embodiment of the present invention.

### [Best Mode]

Hereinafter, embodiments according to the present invention are described in detail with reference to the accompanying drawings. However, the present invention is not limited or restricted by the embodiments. The same reference numerals presented in each drawing represent the same components.

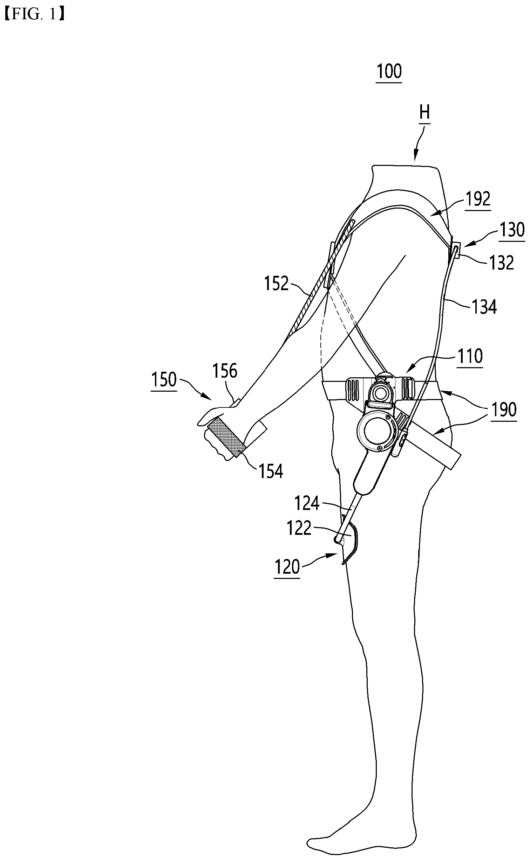

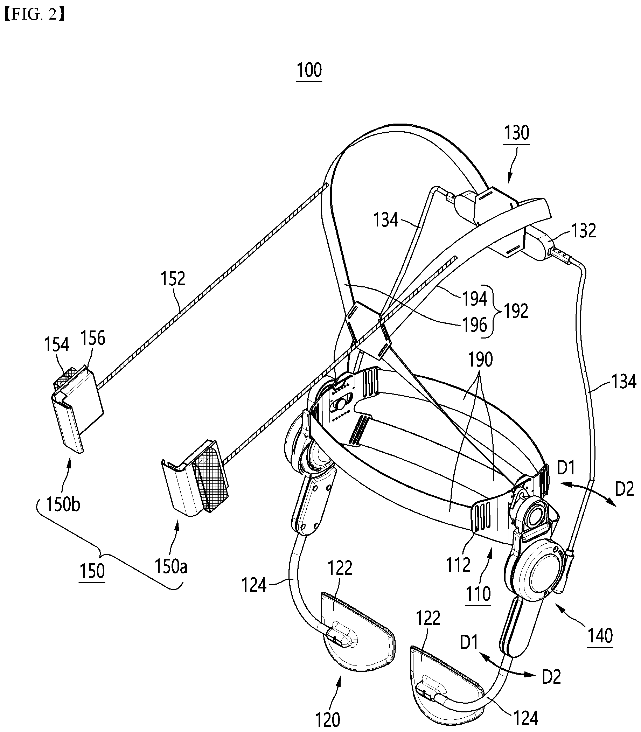

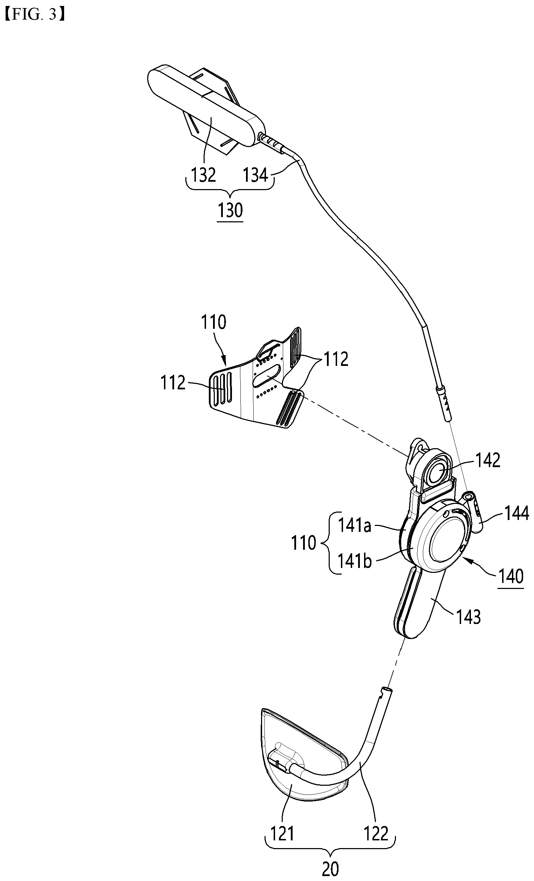

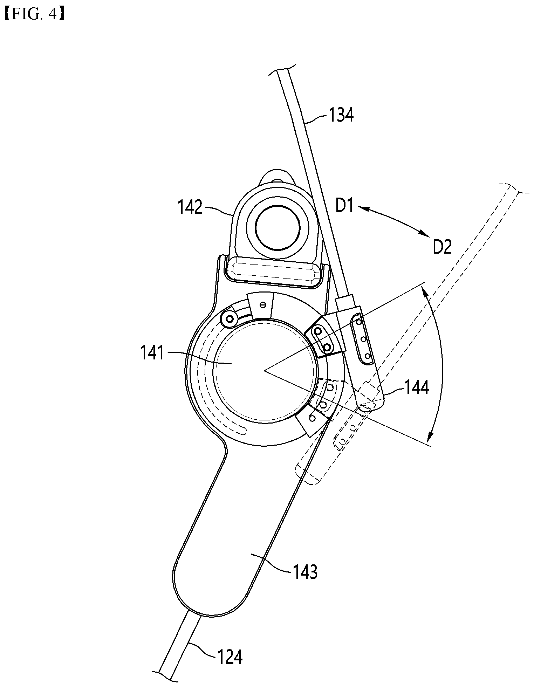

FIG. 1 schematically illustrates a state of wearing a manual muscular strength support robot 100 having a function of supporting the transfer of a heavy object 10 according to an embodiment of the present invention, FIG. 2 illustrates a perspective view of the manual muscular strength support robot 100 illustrated in FIG. 1, and FIG. 3 illustrates an exploded view of a main part of the manual muscular strength support robot 100 illustrated in FIG. 2. FIG. 4 illustrates a manual muscular strength supporter 140 illustrated in FIGS. 1 and 2.

Referring to FIGS. 1 to 4, the manual muscular strength support robot 100 having a function of supporting the transfer of a heavy object 10 according to an embodiment of the present invention may include a first mounting part 110, a second mounting part 120, a third mounting part 130, a manual muscular strength supporter 140, and an arm's muscular strength supporter 150.

The manual muscular strength support robot 100 of the present embodiment may be provided as a wearable structure in the form of an exoskeleton, may be worn on the body of a user H, and may be linked together according to the movement of the user H. At this time, the manual muscular strength supporter 140 may support the movement of the user H by storing the energy for muscle support according to the movement of the user H or consuming the energy for muscle support that is stored in advance.

For example, when the user H moves a first direction D1 while wearing the manual muscular strength support robot 100, the manual muscular strength supporter 140 may store the energy for muscle support. On the other hand, when the user H moves in a second direction D2 different from the first direction D1 while wearing the manual muscular strength support robot 100, the manual muscular strength supporter 140 may provide the previously stored muscle support energy to the manual muscular strength support robot 100 in a direction for supporting the muscle strength of the user H.

Meanwhile, the manual muscular strength support robot 100 of the present embodiment may provide the energy for muscle support stored in the manual muscular strength supporter 140 to the arm of the user H using the arm's muscular strength supporter 150. Accordingly, the user H wearing the manual muscular strength support robot 100 may easily perform various types of muscle strength tasks by utilizing the muscle strength support of the arm's muscular strength supporter 150.

Hereinafter, in the present embodiment, it is explained that the user H wearing the manual muscular strength support robot 100 utilizes the muscle strength support of the arm's muscular strength supporter 150 for the task of transferring the heavy object 10. Here, the heavy object 10 is described as having a box shape like a basket for convenience of explanation, but is described as having hole-shaped handles 12, which can be held by hand, on both sides thereof.

Referring to FIGS. 1 to 3, the first mounting part 110 of the present embodiment may be positioned to be mounted on the hip joint of the user H. The first mounting part 110 may be provided as a pair to be respectively mounted on both sides of the hip joint of the user H. The manual muscular strength supporter 140 may be mounted on each of the pair of first mounting parts 110.

Meanwhile, the manual muscular strength support robot 100 according to an embodiment of the present invention may further include a first wearing member 190 to be worn on the waist of the user H to secure the pair of first mounting parts 110. The first wearing member 190 may be worn on the waist of the user H in a belt shape. In addition, the first wearing member 190 may be further added to be worn in a shape that wraps around the hips of the user H. For this, connecting holes 112 may be formed in each of the pair of first mounting parts 110 to connect the first wearing member 190.

Referring to FIGS. 1 to 3, the second mounting part 120 of the present embodiment may be arranged to be mounted on the thigh area of the user H. The second mounting part 120 may be connected to the manual muscular strength supporter 140, disposed on the first mounting part 110, in an interoperating manner. Accordingly, the second mounting part 120 may be rotated according to the movement of the thigh of the user H, and the manual muscular strength supporter 140 may be operated according to the rotation of the second mounting part 120.

For example, the second mounting part 120 may include a second mounting body 122 disposed on each of the thigh areas of the legs of the user H, and a second connecting member 124 for connecting the second mounting body 122 to the manual muscular strength supporter 140.

The second mounting body 122 may be formed in a curved shape corresponding to the curved thigh shape of the user H. Accordingly, the second mounting body 122 may be mounted in close contact with the thigh of the user H. The second mounting body 122 may be placed on each of a pair of legs of the user H.

The second connecting member 124 may interoperably connect the second mounting body 122 to the manual muscular strength supporter 140. The second connecting member 124 may be provided in a long wire shape. Here, one end of the second connecting member 124 may be connected to one of the pair of second mounting bodies 122, and the other end of the second connecting member 124 may be connected to one of the manual muscular strength supporters 140 placed on the pair of first mounting parts 110.

Referring to FIGS. 1 to 3, the third mounting part 130 of the present embodiment may be arranged to be mounted on the back of the user H. The third mounting part 130 may be connected to the manual muscular strength supporter 140, placed on the first mounting part 110, in an interoperating manner. Accordingly, the third mounting part 130 may rotate together with the movement of the back of the user H according to the movement of the user H's back, and the manual muscular strength supporter 140 may be operated according to the rotation of the third mounting part 130.

Meanwhile, the manual muscular strength support robot 100 according to an embodiment of the present invention may further include second wearing member 192, connected to the third mounting part 130, to be worn on the shoulder of the user H. The second wearing member 192 may be worn on the shoulder of the user H in a brace shape, and may be operated together with the third mounting part 130 while worn on the user H. The second wearing member 192 may include a left belt 194 to be worn on the left shoulder of the user H; and a right belt 196 to be worn on the right shoulder of the user H.

For example, the third mounting part 130 may include a third mounting body 132 to be mounted on the back of the user H; and third connecting members 134 for connecting the third mounting body 132 and the pair of manual muscular strength supporters 140 to each other.

The third mounting body 132 may be mounted in close contact with the center of the back of the user H, and may be connected to the rear of the second wearing member 192 as an integral structure. Accordingly, the third mounting body 132 may be interoperated according to the upper body movement of the user H wearing the second wearing member 192.

The third connecting members 134 may interoperably connect the third mounting body 132 to the manual muscular strength supporter 140. The third connecting members 134 may be provided in a long wire shape. Here, one end of the third connecting members 134 may be connected to one side of the third mounting body 132, and the other end of the third connecting members 134 may be connected to one of the manual muscular strength supporters 140 placed on the pair of first mounting parts 110.

Referring to FIGS. 1 to 4, the manual muscular strength supporters 140 of the present embodiment may be respectively fixed to the pair of first mounting parts 110, and may be connected to the pair of second mounting parts 120 and the third mounting part 130 in an interoperating manner. The manual muscular strength supporter 140 may store the energy for muscle support in the form of elastic force according to the movement of the user H, and may provide the previously stored elastic force to the second mounting parts 120 to the third mounting part 130 as needed so as to support the muscle strength of the user H.

As shown in FIG. 4, the manual muscular strength supporter 140 may store an elastic force when the second mounting part 120 and the third mounting part 130 operate in the first direction D 1 according to the movement of the user H, and may support the muscle strength of the user H when the second mounting part 120 and the third mounting part 130 are forcibly operated in the second direction D2 according to the elastic force. That is, since the manual muscular strength supporter 140 is a passive type that secures elasticity for supporting the muscle strength of the user H through the movement of the user H, configurations such as a power part and a control part may be omitted, so that the overall structure may be very simple. In addition, the use method of the manual muscular strength supporter 140 is also intuitive and simple, and it may be utilized in a form that stores elasticity through a relatively easy movement of the user H and then assists a difficult movement of the user H.

For example, the manual muscular strength supporters 140 may include a body 141, a first connecting part 142, a second connecting part 143, a third connecting part 144, an elastic part 145 and an induction part 146.

The body 141 may include a first driving body 141a and a second driving body 141b connected to each other. A driving space (not shown) may be formed between the first driving body 141a and the second driving body 141b. The first driving body 141a and the second driving body 141b may be coupled to each other to enable coaxial rotation.

The first connecting part 142 may connect the first driving body 141a to the first mounting part 110. The first connecting part 142 may be integrally formed on one side of the first driving body 141a, and may be rotatably mounted on the first mounting part 110.

The second connecting part 143 may connect the first driving body 141a and the second connecting member 124 to each other. The second connecting part 143 may be provided to protrude from the other side of the first driving body 141a toward the second mounting body 122 of the second mounting part 120. Another end of the second connecting member 124 of the second mounting part 120 may be connected to the second connecting part 143.

The third connecting part 144 may connect the second driving body 141b and the third connecting members 134 to each other. The third connecting part 144 may be provided in a tubular shape for insertion and connection of the other end of the third connecting members 134 of the third mounting part 130, and may be movably disposed on the second driving body 141b. The third connecting part 144 may be connected to the second driving body 141b to be slidable along a guide hole formed in the second driving body 141b.

The elastic part 145 may be provided inside the driving space to store an elastic force for supporting muscular strength of the user H and provide the elastic force. The elastic part 145 may be formed such that an elastic force is changed according to the movement of one of the second connecting part 143 and the third connecting part 144. For example, the elastic part 145 may be formed of a spring material such as a coil spring, tape spring, or plate spring that can be elastically deformed. Hereinafter, in the present embodiment, one end of the elastic part 145 may be connected to the second connecting part 143 to interoperate with the movement of the second connecting part 143, and the other end of the elastic part 145 may be connected to the third connecting part 144 to interoperate with the movement of the third connecting part 144.

The induction part 146 may induce deformation of the elastic part 145 in conjunction with the movement of at least one of the first connecting part 142, the second connecting part 143 and the third connecting part 144. For example, the induction part 146 may include a first induction member 146a and a second induction member 146b.

Here, the first induction member 146a may be axially coupled to the first driving body 141a and may be connected to one end of the elastic part 145. Accordingly, the first induction member 146a may be axially rotated together with the first driving body 141a in a direction in which the elastic part 145 is wound or released.

In addition, the second induction member 146b may be connected to the other end of the elastic part 145, and may be provided to be movable along an induction line provided in the first driving body 141a. The second induction member 146b may be pivotally moved together with the third connecting part 144 in a direction in which the elastic part 145 is wound or released.

Referring to FIGS. 1 to 4, the arm's muscular strength supporter 150 of the present embodiment may support the arm muscular strength of the user H using the elastic force stored in the manual muscular strength supporter 140. The arm's muscular strength supporter 150 may be hung on the handles 12 together with the hands of the user H the heavy object 10 when the user H transfers the heavy object 10.

One side part of the arm's muscular strength supporter 150 may be connected to the third mounting part 130, and the other side part of the arm's muscular strength supporter 150 may be worn on the hands of the user H. The arm's muscular strength supporter 150 may support the arm muscular strength of the user H using the elastic force of the manual muscular strength supporter 140 provided to the third mounting part 130. For example, the arm's muscular strength supporter 150 may provide the elastic force of the manual muscular strength supporter 140 to the handles 12 of the heavy object 10 in a lifting direction of the heavy object 10, thereby supporting the arm muscular strength of the user H required for the transfer task of the heavy object 10 and assisting the work of the work of the user H.

Meanwhile, the arm's muscular strength supporter 150 may include a first arm's muscular strength supporter 150a worn on the left hand of the user H, and a second arm's muscular strength supporter 150b worn on the right hand of the user H. The first arm's muscular strength supporter 150a and the second arm's muscular strength supporter 150b may be directly connected to the third mounting part 130 or may be respectively connected to the left belt 194 and right belt 196 of the second wearing member 192.

For reference, the detailed configuration of the arm's muscular strength supporter 150 according to the present invention is described in more detail with reference to the accompanying drawings.

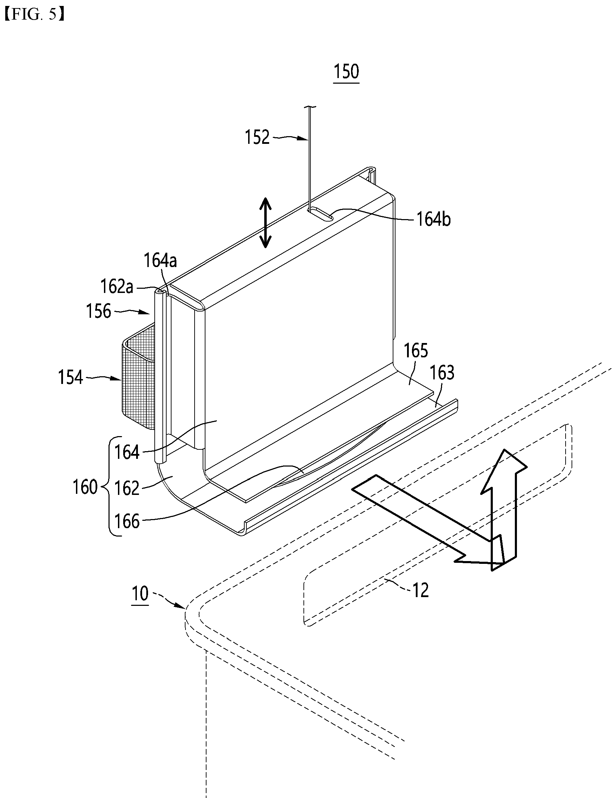

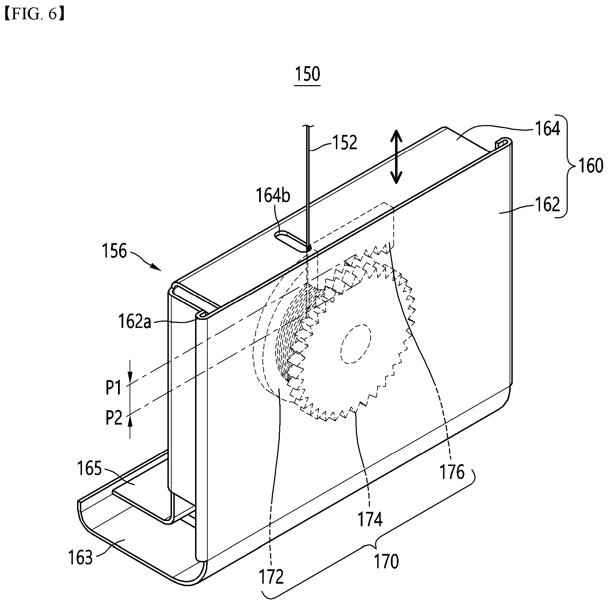

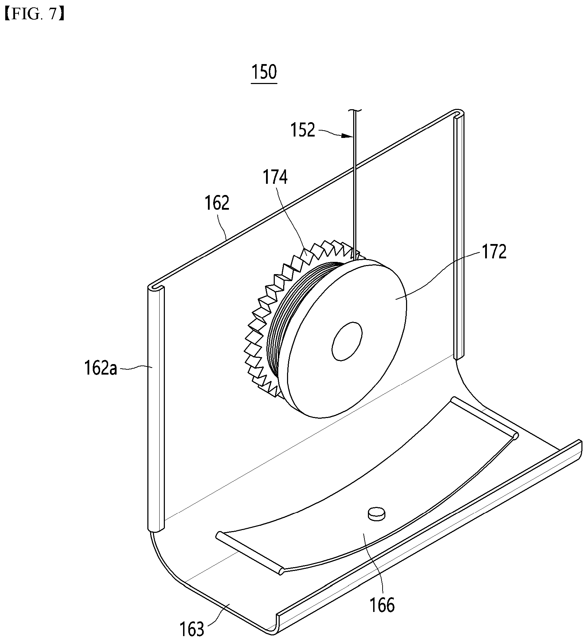

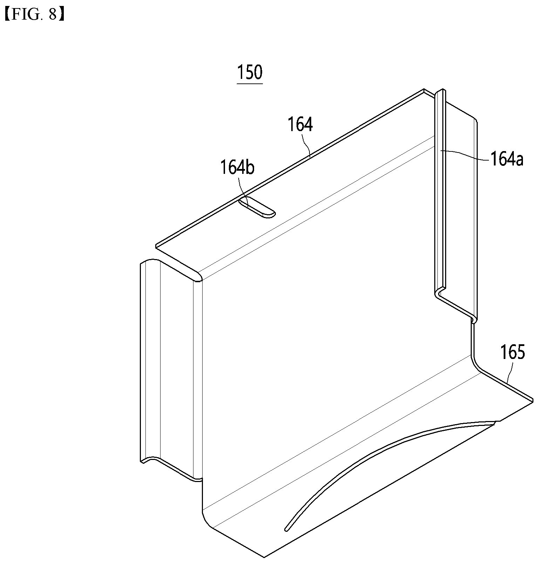

FIGS. 5 to 8 illustrate an arm's muscular strength supporter 150 shown in FIGS. 1 and 2.

Referring to FIGS. 5 to 8,0 the arm's muscular strength supporter 150 according to an embodiment of the present invention may include an arm muscular strength support wire 152, a wearing part 154 and an arm muscular strength support part 156.

The arm muscular strength support wire 152 may be connected to the third mounting part 130 to interoperate with the third mounting part 130. That is, one end of the arm muscular strength support wire 152 may be connected and fixed to the second wearing member 192 connected to the third mounting part 130. Meanwhile, the other end of the arm muscular strength support wire 152 may be connected to the arm muscular strength support part 156 in a length-adjustable manner.

The wearing part 154 may be worn on the hands of the user H. The wearing part 154 may be provided in a structure of being stably worn on the hands of the user H to fix the arm muscular strength support part 156 to the palm areas of the user H. For example, the wearing part 154 may be provided in a shape of a band made of a rubber material with excellent elasticity.

The arm muscular strength support part 156 may assist in lifting the heavy object 10 by being hung on the handles 12 of the heavy object 10 during the transfer task of the heavy object 10. The wearing part 154 may be fixed to the outer surface of the arm muscular strength support part 156. Accordingly, the palms of the user (H) wearing the wearing part 154 may be in close contact with the outer surface of the arm muscular strength support part 156 so as to wrap an arm muscle support part 156. In addition, since the arm muscular strength support part 156 is connected to the other end of the arm muscular strength support wire 152 in a length-adjustable manner, the elastic force of the manual muscular strength supporter 140 provided to the third mounting part 130 may be transmitted to the arm muscular strength support part 156 through the second wearing member 192 and the arm muscular strength support wire 152.

As shown in FIGS. 5 to 8, the arm muscular strength support part 156 of the present embodiment may include a handle hook 160 connected to the wearing part 154, and a wire length adjustment part 170 disposed inside the handle hook 160 and connected to the other end of the arm muscular strength support wire 152.

The handle hook 160 may be hung on the handles 12 of the heavy object 10 while being held by the hands of the user H during the transfer task of the heavy object 10. That is, the handle hook 160 may be inserted together with the hands of the user H into the handles 12 of the heavy object 10 in a state of being grasped with the hands of the user H wearing the wearing part 154 when the transfer task of the heavy object 10 is performed, and may be hung on the handles 12 of the heavy object 10 in the process where the user H lifts the heavy object 10.

When the user H lifts the heavy object 10 in the state where the handle hook 160 is hung on the handles 12 of the heavy object 10, the elastic force of the manual muscular strength supporter 140 transmitted to the arm muscular strength support part 156 is provided together with the force of the user H, so that the user H can lift the heavy object 10 with a force reduced by the elastic force of the manual muscular strength supporter 140.

For example, the handle hook 160 may include a first housing 162, a second housing 164 and an elastic member 166. Here, the first housing 162 and the second housing 164 are components for forming the external shape of the handle hook 160 and may be combined in a structure that can be mutually lifted and lowered. In addition, the elastic member 166 may be disposed between the first housing 162 and the second housing 164 to elastically support the second housing 164 in the lifting direction.

Here, the wearing part 154 may be connected to one side surface of the first housing 162, and the hanging member 163 that is hung on the handles 12 of the heavy object 10 during the transfer task of the heavy object 10 may be formed to protrude on the other side surface of the first housing 162. The hanging member 163 may be inserted into the handles 12 of the heavy object 10 during the transfer task of the heavy object 10, and then may be hung in an up-down direction, thereby supporting the load of the heavy object 10 when lifting or transferring the heavy object 10. Hereinafter, in the present embodiment, it is described that the hanging member 163 protrudes horizontally from a lower portion of the first housing 162 or is formed by bending the lower portion of the first housing 162 in a horizontal direction.

In addition, the second housing 164 may be connected to the other side surface of the first housing 162 so as to be lifted up and down. For this, first lifting guides 162a having a groove shape lengthily extending up and down may be provided at both ends of the first housing 162, and second lifting guides 164a to be inserted into the first lifting guides 162a in a liftable manner therein may be provided at both ends of the second housing 164.

A seating member 165 on which the handles 12 of the heavy object 10 are to be seated during the transfer task of the heavy object 10 may be formed to horizontally protrude from the second housing 164. The seating member 165 is positioned on an upper side of the hanging member 163, and may be provided at a position spaced apart from the hanging member 163 by a predetermined interval in a shape parallel to the hanging member 163. Hereinafter, in the present embodiment, it is described that the seating member 165 is formed to horizontally protrude from a lower part of the second housing 164 or by bending the lower part of the second housing 164 in a horizontal direction.

In addition, the elastic member 166 is a spring member disposed between the hanging member 163 and the seating member 165. The elastic member 166 may provide an elastic force to the seating member 165 in a direction that causes the hanging member 163 and the seating member 165 to be separated from each other. Hereinafter, in the present embodiment, the elastic member 166 is described as a plate spring member installed on the upper surface of the hanging member 163. The elastic member 166 may be provided as a plate spring structure bent in an arc shape, thereby elastically stretching by the load of the heavy object 10 applied to the seating member 165.

Accordingly, when the transfer task of the heavy object 10 is not performed, the second housing 164 may be elevated to a first position P1 along the first housing 162 by the elastic force of the elastic member 166. In addition, when the transfer task of the heavy object 10 is performed, the second housing 164 may be lowered to a second position P2 along the first housing 162 by the load of the heavy object 10 applied to the seating member 165.

The wire length adjustment part 170 may automatically adjust the length of the arm muscular strength support wire 152 according to the position of the handle hook 160. Here, in the case of performing the transfer task of the heavy object 10, the function of the wire length adjustment part 170 to adjust the length of the arm muscular strength support wire 152 may be blocked when the second housing 164 is lowered to the second position P2 and, accordingly, the position of the handle hook 160 may be restrained. Accordingly, the elastic force of the manual muscular strength supporter 140 provided to the third mounting part 130 may be stably transmitted to the handle hook 160 through the arm muscular strength support wire 152.

For example, the wire length adjustment part 170 may include a roll member 172, a roll gear 174 and a restraining member 176.

Here, the roll member 172 may be rotatably disposed on the other side surface of the first housing 162. That is, the roll member 172 may be arranged in a structure accommodated between the first housing 162 and the second housing 164, so that it is not exposed to the outside of the handle hook 160 and, accordingly, may be protected from external impact or collision. The roll member 172 may be provided to wind or unwind the other end of the arm muscular strength support wire 152 according to the rotation direction. Accordingly, the roll member 172 may be connected to the other end of the arm muscular strength support wire 152, and may be provided on the other side surface of the first housing 162 to be rotatable in both directions.

In addition, a plurality of roll gears 174 may be continuously provided along the outer circumference of the roll member 172. That is, the roll gear 174 is a gear tooth protruding by a predetermined height from the outer surface of the roll member 172 along the radial direction, may restrain the rotation of the roll member 172 when engaged with a gear tooth of the restraining member 176, and may release the rotation restraint state of the roll member 172 when not engaged with the gear tooth of the restraining member 176.

In addition, the restraining member 176 may be provided in the second housing 164 to face the roll gear 174. For example, the restraining member 176 may be provided on an upper inner surface of the second housing 164 to restrain the rotation of the roll member 172 by being caught by the roll gear 174 when lowering the second housing 164 to the second position P2. Accordingly, the restraining member 176 may block the length adjustment of the arm muscular strength support wire 152 by being caught by the roll gear 174 and restraining the rotation of the roll member 172 when lowering the second housing 164 to the second position P2.

For example, the restraining member 176 may be provided in the form of either an engaging protrusion that is inserted between the roll gears 174 at the second position P2 of the second housing 164, or a gear tooth that is engaged with a portion of the roll gears 174 at the second position P2 of the second housing 164. The engaging protrusion of the restraining member 176 may lengthily extend from the upper part of the second housing 164 toward the roll gear 174, and may be provided in the form of a single bulkhead inserted between gear teeth of the roll gear 174. In addition, the gear tooth of the restraining member 176 may lengthily extend from the upper part of the second housing 164 toward the roll gear 174, and may be provided in the form of being engaged with a portion of the gear teeth of the roll gear 174. Hereinafter, in the present embodiment, the restraining member 176 is described as having a plurality of gear teeth that are continuously provided along the outer surface of the roll member 172.

Accordingly, in the present embodiment, the user H may insert the hanging member 163 and the seating member 165 of the handle hook 160 into the handles 12 of the heavy object 10 while wearing the arm muscular strength support part 156 on his/her hand, and in this state, the load of the heavy object 10 applied to the seating member 165 may increase as the heavy object 10 is lifted, and the seating member 165 may be lowered to the second position P2 where it is in close contact with the hanging member 163. When the second housing 164 of the handle hook 160 is lowered to the second position P2 together with the seating member 165 as described above, the restraining member 176 arranged in the second housing 164 may be lowered and engaged with the roll gear 174 of the wire length adjustment part 170 to restrain the length adjustment function of the wire length adjustment part 170. That is, before the length adjustment function of the wire length adjustment part 170 is restrained, the length of the arm muscular strength support wire 152 may be easily adjusted according to the length of the arm of the user H, but when the length adjustment function of the wire length adjustment part 170 is restrained, the length of the arm muscular strength support wire 152 is constantly restrained, so the elastic force of the manual muscular strength supporter 140 transmitted through the arm muscular strength support wire 152 may be stably transmitted to the handle hook 160.

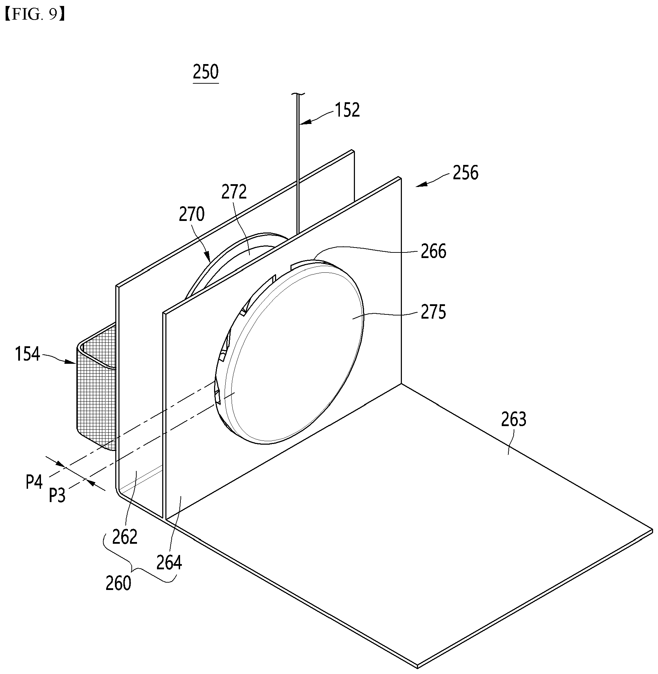

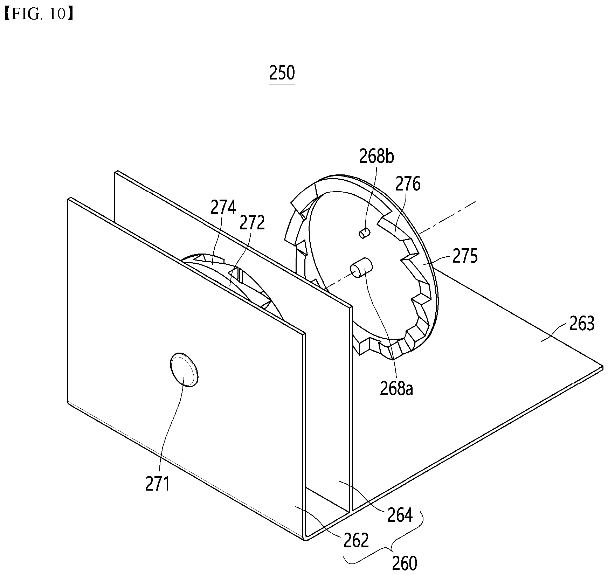

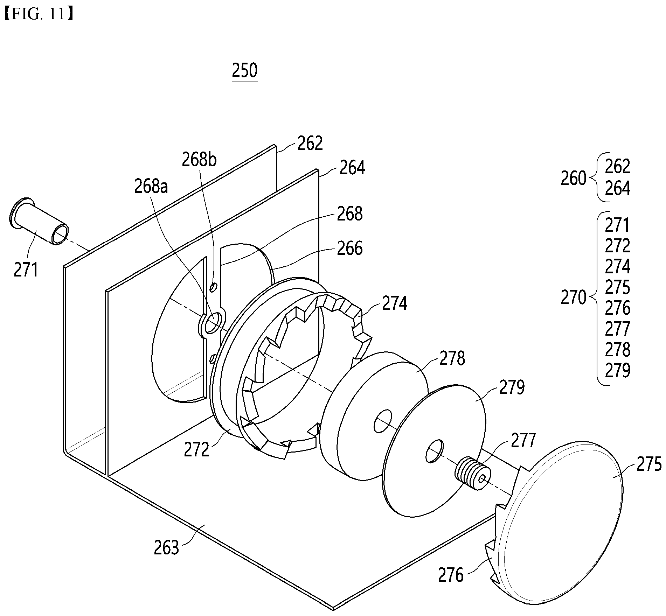

FIGS. 9 to 11 illustrate another embodiment of the arm's muscular strength supporter 150 shown in FIGS. 1 and 2.

FIGS. 9 to 11 illustrate an arm's muscular strength supporter 250 according to another embodiment of the present invention. Compared to the arm's muscular strength supporter 150 shown in FIGS. 5 to 8, there is a difference in the structure of an arm muscular strength support part 256. Hereinafter, in FIGS. 9 to 11, reference numerals identical to or similar to those illustrated in FIGS. 1 to 8 represent identical components, and a detailed description thereof is omitted.

Referring to FIGS. 9 to 11, the arm muscular strength support part 256 of the present embodiment may include a handle hook 260 connected to a wearing part 154, and a wire length adjustment part 270 disposed inside the handle hook 260 and connected to the other end of an arm muscular strength support wire 152.

The handle hook 260 may be hung on handles 12 of a heavy object 10 while being held by the hands of a user H during the transfer task of the heavy object 10. For example, the handle hook 260 may include a first housing 262, a second housing 264, a pressing member 266 and an elastic member 268.

Here, the wearing part 154 may be connected to one side surface of the first housing 262, and a hanging member 263 hung on the handles 12 of the heavy object 10 during the transfer task of the heavy object 10 may be formed to protrude from the other side surface of the first housing 262. The hanging member 263 may be inserted into the handles 12 of the heavy object 10 during the transfer task of the heavy object 10, and then hung on the handles 12 in an up-down direction, thereby supporting the load of the heavy object 10 when lifting or transferring the heavy object 10.

In addition, the second housing 264 may be disposed at a position facing the other side surface of the first housing 262, and may be integrally connected to the first housing 262. The second housing 264 may be disposed parallel to the first housing 262, so the wire length adjustment part 270 may be disposed between the second housing 264 and the first housing 262. Meanwhile, the second housing 264 may be in a close contact with a side surface of the heavy object 10 with the handles 12 during the transfer task of the heavy object 10.

In the second housing 264, a housing restraint hole 266 for installing the pressing member 266 may be formed. A hole support 268 may be provided in the housing restraint hole 266 in a shape passing through the center of the hole. An axial hole 268a into which a central axis 275a of the pressing member 266 is to be inserted may be formed in the middle of the hole support 268, and a positioning hole 268b into which the position-fixing protrusion 275b of the pressing member 266 is to be inserted may be formed at the outer portion of the hole support 268.

In addition, the pressing member 266 may be movably disposed in the housing restraint hole 266 of the second housing 264. That is, when the second housing 264 is brought in close contact with the side surface of the heavy object 10 during the transfer task of the heavy object 10, the pressing member 266 may be pressed according to the contacting force.

For this, one side part, which is in close contact with the side surface of the heavy object 10, of both side parts of the pressing member 266 may be positioned to protrude by a predetermined height from the surface of the second housing 264. In addition, the other side part, which is inserted into the housing restraint hole 266, of both side parts of the pressing member 266 may be connected to the hole support 268 of the second housing 264 to move in the horizontal direction of pressing.

For example, the central axis 275a, which is inserted into the axial hole 268a of the hole support 268, may be provided to protrude from the center of the other side part of the pressing member 266, and the position-fixing protrusion 275b, which is inserted into the positioning hole 268b of the hole support 268, may be provided to protrude from a portion other than the center of the other side part of the pressing member 266. Accordingly, the central axis 275a and the position-fixing protrusion 275b may slidably move in a horizontal direction when pressing the pressing member 266 while being inserted into the axial hole 268a and the positioning hole 268b.

In addition, the elastic member 268 is an elastic body for elastically supporting the pressing member 266, and may be disposed between the pressing member 266 and the second housing 264. The elastic member 268 may provide an elastic force to the pressing member 266 in a direction in which one side part of the pressing member 266 protrudes from the second housing 264. For example, the elastic member 268 may be provided as a coil spring that is disposed on the central axis 275a of the pressing member 266, and both ends of the coil spring may be disposed at the other side part of the pressing member 266 and the hole support 268.

Accordingly, when the transfer task of the heavy object 10 is not performed, the pressing member 266 may move to a third position P3, which protrudes from the second housing 264, by the elastic force of the elastic member 268. In addition, when the transfer task of the heavy object 10 is performed, the pressing member 266 may be interfered with the heavy object 10 by the hands of the user H and may move a fourth position P4 pressed into the inside of the second housing 264.

The wire length adjustment part 270 may automatically adjust the length of the arm muscular strength support wire 152 according to the position of the handle hook 260. Here, in the case of performing the transfer task of the heavy object 10, the length adjustment function of the arm muscular strength support wire 152 may be blocked when the pressing member 266 is pressed and moved to the fourth position P4, whereby the position of the handle hook 260 may be restrained. Accordingly, the elastic force of the manual muscular strength supporter 140 provided to the third mounting part 130 may be stably transmitted to the handle hook 260 through the arm muscular strength support wire 152.

For example, the wire length adjustment part 270 may include a roll member 272, a roll gear 274 and a restraining member 276.

Here, the roll member 272 may be rotatably disposed on the other side surface of the first housing 162 to face the pressing member 266. That is, the roll member 272 may be arranged in a structure accommodated between the first housing 262 and the second housing 264, so that it is not exposed to the outside of the handle hook 260 and, accordingly, may be protected from external impact or collision.

The roll member 272 may be connected to the other end of the arm muscular strength support wire 152 and provided on the other side surface of the first housing 162 to be rotatable in both directions to wind or unwind the other end of the arm muscular strength support wire 152 according to the rotation direction. For example, the roll member 272 may be provided in a bobbin shape to wind the arm muscular strength support wire 152 on the outer surface, and may be arranged to be idly rotated in the first housing 262 by a roll rotation axis 271. A roll-type elastic body 278 that provides an elastic force in a direction of winding the arm muscular strength support wire 152 may be arranged inside the roll member 272, and a roll cover 279 for preventing the roll-type elastic body 278 from being detached may be mounted on one surface of the roll member 272.

In addition, the roll gear 274 may be provided on one side surface, which corresponds to the pressing member 266, of both side surfaces of the roll member 272, and a plurality of roll gears 274 may be continuously provided along the edge of one side surface of the roll member 272. That is, the roll gear 274 is a gear tooth that protrudes by a predetermined height from the edge of the side surface of the roll member 272 in the horizontal direction, may restrain the rotation of the roll member 272 when engaged with the gear tooth of the restraining member 276 provided in the pressing member 266, and may release the rotation restraint state of the roll member 272 when not engaged with the gear tooth of the restraining member 276 provided in the pressing member 266.

In addition, the restraining member 276 may be provided at the other side part of the pressing member 266 facing the roll gear 274. For example, the restraining member 276 may be provided at the edge of the other side part of the pressing member 266 to restrain the rotation of the roll member 272 by being caught by the roll gear 274 when the pressing member 266 is moved to the fourth position P4. Accordingly, the restraining member 276 may restrain the rotation of the roll member 272 by being caught by the roll gear 274 when the pressing member 266 is transferred to the fourth position P4, thereby blocking the length adjustment of the arm muscular strength support wire 152.

For example, the restraining member 276 may be provided in the form of either an engaging protrusion that is inserted between the roll gears 274 at the fourth position P4 of the pressing member 266 or a gear tooth that is engaged with the roll gears 274 at the fourth position P4 of the pressing member 266. Hereinafter, in the present embodiment, the restraining member 276 is described as a plurality of gear teeth continuously provided along the edge of the other side part of the pressing member 266.

Accordingly, in the present embodiment, the user H may insert the hanging member 263 of the handle hook 260 into the handles 12 of the heavy object 10 while wearing an arm muscular strength support part 256 on his/her hand. In this process, the handle hook 260 may be brought into close contact with the side surface of the heavy object 10, and the pressing member 266 may horizontally move from the third position P3 to the fourth position P4. When the pressing member 266 of the handle hook 260 moves to the fourth position P4 as described above, the restraining member 276 formed at the other side part of the pressing member 266 moves and engaged with the roll gear 274 of the wire length adjustment part 270, thereby restraining the length adjustment function of the wire length adjustment part 270. That is, before the length adjustment function of the wire length adjustment part 270 is restrained, the length of the arm muscular strength support wire 152 may be easily adjusted according to the length of the arm of the user H, but when the length adjustment function of the wire length adjustment part 270 is restrained, the length of the arm muscular strength support wire 152 is constantly restrained, so the elastic force of the manual muscular strength supporter 140 transmitted through the arm muscular strength support wire 152 may be stably transmitted to the handle hook 260.

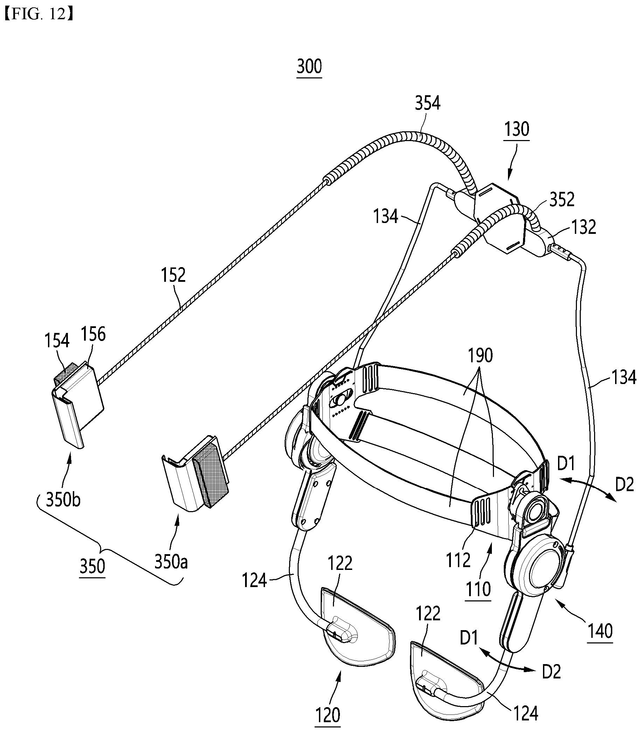

FIG. 12 schematically illustrates a wearing state of a manual muscular strength support robot 300 having a transport support function for a heavy object 10 according to another embodiment of the present invention.

In FIG. 12, the same or similar reference numerals as those shown in FIGS. 1 to 8 indicate the same elements, and a detailed description thereof is omitted. Hereinafter, differences from the manual muscular strength support robot 100 having a transport support function for the heavy object 10 illustrated in FIGS. 1 to 8 are mainly described.

Referring to FIG. 12, the manual muscular strength support robot 300 having a transport support function for the heavy object 10 according to another embodiment of the present invention differs from the manual muscular strength support robot 100 illustrated in FIGS. 1 to 8 in that an arm muscular strength support wire 152 of an arm's muscular strength supporter 350 is connected to a third mounting part 130.

The arm's muscular strength supporter 350 of the present embodiment may include an arm muscular strength support wire 152, a wearing part 154, an arm muscular strength support part 156 and wire guides 352 and 354.

Here, the arm muscular strength support wire 152, the wearing part 154 and the arm muscular strength support part 156 of the present embodiment are the same as the arm muscular strength support wire 152, the wearing part 154 and the arm muscular strength support part 156 illustrated in FIGS. 1 to 8, so a detailed description thereof is omitted.

However, in this present embodiment, one end of the arm muscular strength support wire 152 may be directly connected to a third mounting body 132 of the third mounting part 130, not the second wearing member 192 connected to the third mounting part 130.

In addition, the wire guides 352 and 354 of the present embodiment may be provided in a pipe shape to accommodate the arm muscular strength support wire 152 thereinside. One end of each of the wire guides 352 and 354 may be connected to the third mounting body 132 of the third mounting part 130, and the other end of each of the wire guides 352 and 354 may be placed in front of the user H so as to face the front of the user H. Here, the wire guides 352 and 354 may lengthily extend to the chest portion along the back and shoulder line of the user H from the third mounting part 130.

The wire guides 352 and 354 may be provided in a manner of being hung on the shoulder of the user H. Inside the wire guides 352 and 354, one end of the arm muscular strength support wire 152 connected to the arm muscular strength support part 156 may be arranged. That is, the end of the arm muscular strength support wire 152 may be directly connected to the third mounting part 130 in a state of being inserted into the wire guides 352 and 354. Accordingly, the elastic force of the manual muscular strength supporter 140 provided to the third mounting part 130 may be directly transmitted to the arm muscular strength support wire 152 without passing through the second wearing member 192.

Meanwhile, the wire guides 352 and 354 may be respectively placed on both the shoulders of the user H. Accordingly, the strength and rigidity of the wire guides 352 and 354 may be appropriately secured, so that the manual muscular strength support robot 300 may be stably supported and the wearability of the manual muscular strength support robot 300 may be further improved.

As described above, the embodiments of the present invention have been explained with reference to specific details, such as specific components, and limited embodiments and drawings, but these are only provided to help a more general understanding of the present invention, and the present invention is not limited to the embodiments. Various modifications and variations can be made from these descriptions by those with ordinary knowledge in the field to which the present invention belongs. Therefore, it should be understood that the idea of the present invention is not limited to the described embodiments, and not only the accompanying claims, but also all particulars that are equivalent or alternative to the scope of the claims fall into the category of the idea of the present invention.

## Claims

1. A manual muscular strength support robot having a function of supporting transfer of a heavy object, comprising:
a first mounting part mounted on the coxa region of a user,
a second mounting part mounted on the femoral region of the user,
a third mounting part mounted on the back region of the user,
a manual muscular strength supporter fixed to the first mounting part, inter-operably connected to the second mounting part and the third mounting part, and configured to store an elastic force for supporting muscular strength of the user to provide the elastic force to the second mounting part and the third mounting part, and
an arm's muscular strength supporter, one side part of which is connected to the third mounting part, the other side part of which is worn on the hand of the user, and which is engaged with a handle of a heavy object together with the hands of the user when the user transfers the heavy object so as to support arm muscular strength of the user by using an elastic force of the manual muscular strength supporter.

2. The manual muscular strength support robot according to claim 1, wherein the manual muscular strength supporter operates the second mounting part and the third mounting part in a first direction according to a movement of the user to store the elastic force, and operates the second mounting part and the third mounting part in a second direction according to the elastic force to support muscle strength of the user, and
the arm's muscular strength supporter provides the elastic force provided to the third mounting part to a handle of the heavy object in a direction of lifting the heavy object to support arm muscular strength of the user necessary for a transfer task of the heavy object.

3. The manual muscular strength support robot according to claim 2, wherein the arm's muscular strength supporter comprises:
an arm muscular strength support wire whose one end is fixed to the third mounting part to interoperate together with the third mounting part;
a wearing part worn on hands of the user; and
an arm muscular strength support part fixed to the wearing part, connected to the other end of the arm muscular strength support wire, and, when transferring the heavy object, hung on the handle of the heavy object to assist in lifting the heavy object.

4. The manual muscular strength support robot according to claim 3, further comprising:
a first wearing member worn on a waist of the user and provided with the first mounting part fixed thereto; and
a second wearing member worn on shoulders of the user, and connected to the third mounting part to operate together with the third mounting part,
wherein one end of the arm muscular strength support wire is connected to the second wearing member.

5. The manual muscular strength support robot according to claim 3, wherein the arm's muscular strength supporter further comprises a wire guide having one end connected to the third mounting part, the wire guide lengthily extending forward along the shoulder of the user from the third mounting part and having a pipe shape to accommodate the arm muscular strength support wire thereinside,
wherein one end of the arm muscular strength support wire is inserted into the wire guide and connected to the third mounting part.

6. The manual muscular strength support robot according to claim 3, wherein the arm muscular strength support part comprises:
a handle hook connected to the wearing part, and hung on the handle of the heavy object while being held by the hand of the user when transferring the heavy object; and
a wire length adjustment part arranged inside the handle hook to be connected to the other end of the arm muscular strength support wire, and configured to automatically adjust a length of the arm muscular strength support wire according to a position of the handle hook.

7. The manual muscular strength support robot according to claim 6, wherein the handle hook comprises:
a first housing, the wearing part being connected to one side surface of the first housing, and a hanging member hung on the handle of the heavy object when transferring the heavy object to support a load of the heavy object protruding from the other side surface of the first housing;
a second housing connected to the other side surface of the first housing so as to be lifted up and down, and provided with a seating member, where the handle of the heavy object is to be seated when transferring the heavy object, formed to protrude from an upper side of the hanging member; and
an elastic member disposed between the hanging member and the seating member to elastically support the second housing.

8. The manual muscular strength support robot according to claim 7, wherein the elastic member is provided to apply an elastic force to the seating member in a direction of lifting the second housing,
the second housing is lifted to a first position along the first housing by an elastic force of the elastic member when not transferring the heavy object, and is lowered to a second position along the first housing by the load of the heavy object acting on the seating member when transferring the heavy object, and
a length adjustment function of the wire length adjustment part for the arm muscular strength support wire is blocked when the second housing is lowered to the second position so that a position of the handle hook is restrained.

9. The manual muscular strength support robot according to claim 8, wherein the wire length adjustment part comprises:
a roll member rotatably disposed on the other side surface of the first housing and connected to the other end of the arm muscular strength support wire to wind or unwind the other end of the arm muscular strength support wire according to a rotation direction;
a plurality of roll gears continuously provided along an outer circumference of the roll member; and
a restraining member provided in the second housing to face the roll gear, and configured to restrain rotation of the roll member by being caught by the roll gear when the second housing is lowered to the second position.

10. The manual muscular strength support robot according to claim 9, wherein the restraining member is provided in a form of either an engaging protrusion into which the roll gears are inserted when the second housing is lowered to the second position; or a gear tooth engaged with a portion of the roll gears.

11. The manual muscular strength support robot according to claim 6, wherein the handle hook comprises:
a first housing, the wearing part being connected to one side surface of the first housing, and a hanging member hung on the handle of the heavy object when transferring the heavy object to support a load of the heavy object protruding from the other side surface of the first housing;
a second housing integrally connected to the first housing to face the other side surface of the first housing and brought into close contact with the heavy object when transferring the heavy obj ect;
a pressing member movably disposed in the second housing, and pressed by being brought into close contact with the heavy object when transferring the heavy object; and
an elastic member disposed between the pressing member and the second housing to elastically support the pressing member.

12. The manual muscular strength support robot according to claim 11, wherein the elastic member is provided to apply an elastic force to the pressing member in a direction of protruding from the second housing,
the pressing member moves to a third position, which protrudes from the second housing, by an elastic force of the elastic member when not transferring the heavy object, and moves to a fourth position, pressed to an inside of the second housing, by interference with the heavy object when transferring the heavy object, and
a length adjustment function of the wire length adjustment part for the arm muscular strength support wire is blocked when the pressing member moves to the fourth position, so that a position of the handle hook is restrained.

13. The manual muscular strength support robot according to claim 12, wherein the wire length adjustment part comprises:
a roll member rotatably disposed on the other side surface of the first housing to face the pressing member and connected to the other end of the arm muscular strength support wire to wind or unwind the other end of the arm muscular strength support wire according to a rotation direction;
a plurality of roll gears continuously provided along an edge of one side surface, which corresponds to the pressing member, of both side surfaces of the roll member; and
a restraining member provided on one side surface, which faces the roll gear, of the pressing member and configured to restrain rotation of the roll member by being caught by the roll gear when the pressing member is moved to the fourth position.

14. The manual muscular strength support robot according to claim 13, wherein the restraining member is provided in a form of either an engaging protrusion inserted between the roll gears when the pressing member is moved to the fourth position, or a gear tooth engaged with the roll gears.

15. The manual muscular strength support robot according to claim 3, wherein the arm's muscular strength supporter comprises a first arm's muscular strength supporter worn on a left hand of the user, and a second arm's muscular strength supporter worn on a right hand of the user, and
the first arm's muscular strength supporter and the second arm's muscular strength supporter are connected to the third mounting part.

16. The manual muscular strength support robot according to claim 4, wherein the manual muscular strength supporter is fixed to the first mounting part arranged on each of both sides of the first wearing member,
the second mounting part comprises a second mounting body disposed on each thigh area of the user; and a second connecting member for connecting the second mounting body and the manual muscular strength supporter one by one,
the third mounting part comprises a third mounting body mounted on a back region of the user; and third connecting members for connecting the third mounting body and the manual muscular strength supporters.

17. The manual muscular strength support robot according to claim 16, wherein the manual muscular strength supporter comprises:
a body comprising a first driving body and second driving body connected to each other, a driving space being formed between the first driving body and the second driving body;
a first connecting part for connecting the first driving body to the first mounting part;
a second connecting part for connecting the first driving body and the second connecting member;
a third connecting part for connecting the second driving body and the third connecting members;
an elastic part provided in the driving space and having a deformable elastic force; and
an induction part configured to interoperate with a movement of at least one of the first connecting part, the second connecting part and the third connecting part to induce deformation of the elastic part.

18. The manual muscular strength support robot according to claim 17, wherein the induction part comprises:
a first induction member axially coupled to the first driving body, connected to one end of the elastic part, and configured to axially rotate in a direction in which the elastic part is wound or released; and
a second induction member connected to the other end of the elastic part, and provided to move along an induction line provided in the first driving body.
